(19) **Europäisches Patentamt**
**European Patent Office**
**Office européen des brevets**

(11) Veröffentlichungsnummer: **0 191 421 B1**

(12) **EUROPÄISCHE PATENTSCHRIFT**

(45) Veröffentlichungstag der Patentschrift: 05.06.91    (51) Int. Cl.⁵ **H04L 1/20**

(21) Anmeldenummer: 86101547.7

(22) Anmeldetag: 06.02.86

(54) **Überwachungsschaltung für Digitalsignale.**

(30) Priorität: 13.02.85 DE 3504835

(43) Veröffentlichungstag der Anmeldung:
20.08.86 Patentblatt 86/34

(45) Bekanntmachung des Hinweises auf die
Patenterteilung:
05.06.91 Patentblatt 91/23

(84) Benannte Vertragsstaaten:
**AT DE FR GB NL**

(56) Entgegenhaltungen:
**DE-A- 3 441 227**

**IBM TECHNICAL DISCLOSURE BULLETIN,
Band 23, Nr. 5, Oktober 1980, Seiten
2049-2050, New York, US; J.R. CALVA et al.:
"Communication lines status indicator control"**

**PATENT ABSTRACTS OF JAPAN, Band 7, Nr.
229 (E-203)[1374], 12. Oktober 1983; & JP-
A-58 117 754**

(73) Patentinhaber: **Alcatel N.V.**
**De Lairessestraat 153**
**NL-1075 HK Amsterdam(NL)FR GB NL AT**

Patentinhaber: **Standard Elektrik Lorenz Aktiengesellschaft**
**Lorenzstrasse 10**
**W-7000 Stuttgart 40(DE)DE**

(72) Erfinder: **Klein, Michael, Dr.**
**Pastoraleweg 7**
**W-7000 Stuttgart 40(DE)**
Erfinder: **Wölk, Joachim**
**Seestrasse 59**
**W-7140 Ludwigsburg(DE)**

(74) Vertreter: **Villinger, Bernhard, Dipl.-Ing. et al**
**Standard Elektrik Lorenz AG Patent- und Lizenzwesen Postfach 30 09 29**
**W-7000 Stuttgart 30(DE)**

## Beschreibung

Die Erfindung betrifft eine Überwachungsschaltung für Digitalsignale in einer getakteten Schaltung, insbesondere in einer getakteten Schaltung mit sehr hoher Taktfrequenz.

Der Erfindung liegt die Aufgabe zugrunde, für den Einsatz in einer getakteten Schaltung eine Überwachungsschaltung anzugeben, mit der festgestellt werden kann, ob ein Nutz-Datensignal vorliegt oder nicht.

Diese Aufgabe wird gelöst durch eine Überwachungsschaltung nach der Lehre des Hauptanspruchs. Dabei wird davon ausgegangen, daß bei Vorhandensein eines Nutzsignals ein häufiger Wechsel der Signalpegel erfolgt und daß bei einer Störung der Signalpegel konstant bleibt.

Eine derartige Überwachungsschaltung ist vorzugsweise dort verwendbar, wo nicht die Art eines auftretenden Fehlers zu ermitteln ist, sondern der Ort, an dem der Fehler auftritt.

Vorteilhafte Ausgestaltungen der Erfindung sind den Unteransprüchen zu entnehmen.

Im folgenden wird die Erfindung anhand von Ausführungsbeispielen unter Zuhilfenahme der beiliegenden Zeichnung weiter erläutert.

Figur 1    zeigt das Blockschaltbild eines einfachen Ausführungsbeispiels einer erfindungsgemäßen Überwachungsschaltung.

Figur 2    zeigt das Blockschaltbild eines integrierten Koppelfeldbausteins mit einer erfindungsgemäßen Überwachungsschaltung.

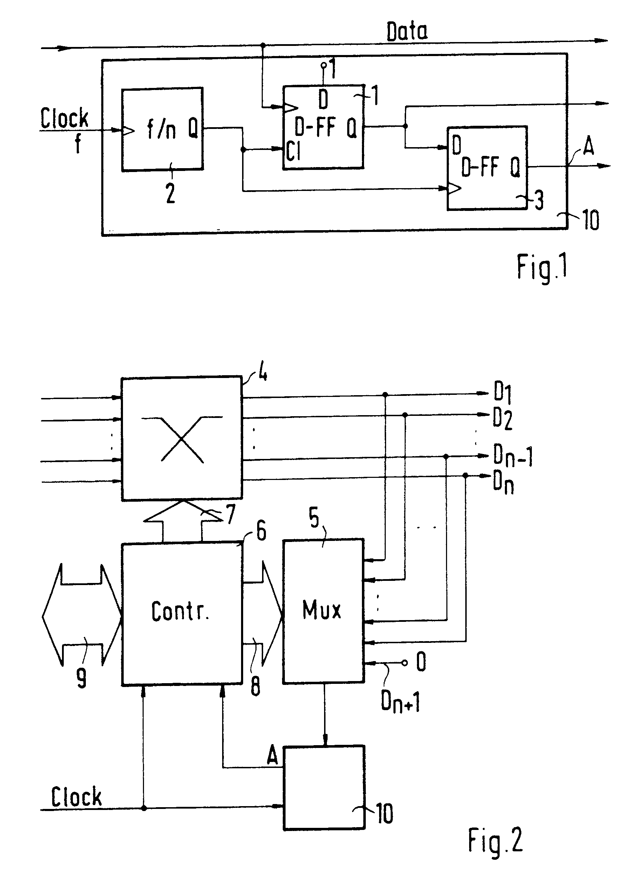

Figur 1 zeigt zunächst eine zu überwachende Datenleitung Data. Die Datenleitung Data ist mit dem Takteingang eines ersten Datenflipflops 1 verbunden. Der Dateneingang D des ersten Datenflipflops 1 ist mit einem Spannungspegel verbunden, der dem logischen Wert "1" entspricht. Immer dann, wenn der Signalzustand auf der Datenleitung Data von "0" auf "1" wechselt, wird das erste Datenflipflop 1 gesetzt, d.h. am Ausgang Q erscheint der logische Wert "1". Am Ausgang Q des ersten Datenflipflops 1 kann somit abgelesen werden, ob auf der Datenleitung Data seit dem letzten Rücksetzen des Datenflipflops 1 Daten übertragen wurden. Der Rücksetzeingang Cl des ersten Datenflipflops 1 ist mit dem Ausgang Q eines Frequenzteilers 2 verbunden. Der Eingang des Frequenzteilers 2 ist mit einer Taktleitung Clock verbunden, die auch den Takt angibt, mit dem auf der Datenleitung Data Daten übertragen werden. Die Taktfrequenz f wird im Frequenzteiler 2 durch einen Faktor n geteilt. Dieser Faktor n wird beispielsweise so gewählt, daß zwischen zwei Rücksetzimpulsen für das Datenflipflop 1 bei Übertragung auf der Datenleitung Data mindestens ein Synchronisierzeichen und damit auch mindestens ein Flankenwechsel in jeder Richtung erfolgt.

Häufig ist der Zeitpunkt, zu dem nach dem Rücksetzen des Datenflipflops 1 dieses über den Takteingang wieder gesetzt wird, ohne Bedeutung. Für diesen Fall wird dem ersten Datenflipflop 1 ein zweites Datenflipflop 3 nachgeschaltet. Der Dateneingang D dieses zweiten Datenflipflops 3 ist mit dem Ausgang Q des ersten Datenflipflops 1 und der Takteingang des zweiten Datenflipflops 3 mit dem Ausgang Q des Frequenzteilers 2 verbunden. Immer dann, wenn das erste Datenflipflop 1 zurückgesetzt wird, wird dessen letzter Wert in das zweite Datenflipflop 3 übernommen. Am Ausgang Q des zweiten Datenflipflops 3 liegt damit solange der logische Wert "1" an, solange auf der Datenleitung Data Daten übertragen werden. Erst wenn auf der Datenleitung Data während einer durch den Frequenzteiler 2 und die Taktfrequenz f bestimmten Zeit kein Datenwechsel mehr erfolgt, wird das zweite Datenflipflop 3 auf "0" zurückgesetzt. Der Frequenzteiler 2 kann in bekannter Weise aus hintereinandergeschalteten Datenflipflops aufgebaut werden. Dabei ist jeweils der Takteingang des nachfolgenden Datenflipflops mit dem Datenausgang Q des vorangehenden Datenflipflops verbunden; der Dateneingang D eines jeden Datenflipflops ist mit seinem invertierten Ausgang $\overline{Q}$ verbunden. Damit erhält man eine Diskriminatorbaugruppe 10, bestehend aus erstem Datenflipflop 1, Frequenzteiler 2 und zweitem Datenflipflop 3, die ausschließlich aus gleichartigen Datenflipflops aufgebaut ist.

Anstelle des ersten Datenflipflops 1 kann auch eine andersartig aufgebaute Erkennungsschaltung vorhanden sein. Beispielsweise kann der mit der Datenleitung Data verbundene Eingang dieser Erkennungsschaltung so ausgebildet sein, daß die Schaltung sowohl auf steigende, wie auch auf fallende Flanken anspricht. Der Eingang kann auch so ausgebildet sein, daß der Dateninhalt des auf der Datenleitung Data übertragenen Signals soweit ausgewertet wird, daß erkennbar ist, ob wirklich ein echter Informationsgehalt vorliegt oder ob nur durch die besondere Art der Codierung trotz eines inhaltlosen Signals ständig Pegelwechsel auftreten.

Im Ausführungsbeispiel nach Figur 2 ist die anhand der Figur 1 beschriebene Diskriminatorbaugruppe 10 zur Überwachung einer großen Baueinheit eingesetzt. Die ganze Schaltung kann dann gegebenenfalls mit weiteren Baugruppen in einer einzigen integrierten Schaltung zusammengefaßt werden. Dabei kann, wie im folgenden gezeigt wird, die Funktion der gesamten integrierten Schaltung von außen überprüft werden, ohne daß hierzu zusätzliche Anschlüsse erforderlich sind.

An die Stelle der zu überwachenden Datenleitung Data im Beispiel nach Figur 1 tritt im Beispiel nach Figur 2 eine Mehrzahl von Datenleitungen D$_1$

... $D_n$, wovon die Datenleitungen $D_1$, $D_2$ $D_{n-1}$ und $D_n$ in der Figur eingezeichnet sind. Zwischen die Datenleitungen $D_1$ ... $D_n$ und den Dateneingang der Diskriminatorbaugruppe 10 ist ein Multiplexer 5 eingefügt. Damit können von einer Diskriminatorbaugruppe 10 je nach Ansteuerung des Multiplexers 5 wahlweise die einzelnen Leitungen überwacht werden. Ein weiterer Dateneingang $D_{n+1}$ des Multiplexers 5 ist mit einem festen Potential verbunden, das dem logischen Wert "0" entspricht. Dadurch wird auch die Überprüfung des Multiplexers 5 und der Diskriminatorbaugruppe 10 möglich. Im störungsfreien Betrieb, wenn auf allen Datenleitungen Daten ausgetauscht werden, ist nämlich der Ausgang A der Diskriminatorbaugruppe 10, der mit dem Ausgang Q des zweiten Datenflipflops 3 verbunden ist, ständig auf dem logischen Wert "1". Am Ausgang A erscheint deshalb bei störungsfreiem Betrieb nur dann der logische Wert "0", wenn die Diskriminatorbaugruppe 10 über den Multiplexer 5 mit dessen Dateneingang $D_{n+1}$ verbunden ist.

Die Auswahl der durch den Multiplexer 5 zur Diskriminatorbaugruppe 10 durchgeschalteten Datenleitung erfolgt von einem Steuerteil 6 aus über Adressleitungen 8. Das Steuerteil 6 ist an einen Steuerdatenbus 9 angeschlossen. Das Steuerteil 6 und die Diskriminatorbaugruppe 10 erhalten über die Taktleitung Clock von außerhalb der integrierten Schaltung einen Takt. Das Steuerteil 6 ist in erster Linie zur Steuerung einer Koppelfeldeinrichtung 4 vorgesehen, mit der es durch Steuerleitungen 7 verbunden ist. Die Datenleitungen $D_1$ bis $D_n$ sind mit den Ausgängen der Koppelfeldeinrichtung 4 verbunden. Über den für die Ansteuerung und Überwachung der Koppelfeldeinrichtung 4 ohnehin erforderlichen Steuerdatenbus 9 kann damit auch der Multiplexer 5 angesteuert und über den mit dem Steuerteil 6 verbundenen Ausgang A der Diskriminatorbaugruppe 10 das Ergebnis der Überwachung der Ausgangsleitungen $D_1$ bis $D_n$ abgefragt werden.

Die anhand der Figur 2 beschriebene integrierte Schaltung ist für die Vermittlung breitbandiger Signale, beispielsweise für Bildfernsprechverbindungen, vorgesehen. In der gesamten Vermittlung ist eine Mehrzahl gleichartiger Koppelfeldeinrichtungen vorhanden. Jede vermittelte Verbindung läuft über mehrere hintereinander geschaltete Koppelfeldeinrichtungen, wobei aber von außen nicht erkennbar ist, welcher von mehreren möglichen Wegen tatsächlich gewählt ist. Tritt ein Fehler auf, so ist es in erster Linie erforderlich, diesen Fehler zu lokalisieren. Hierzu ist die beschriebene Überwachungsschaltung besonders geeignet.

**Ansprüche**

1. Überwachungsschaltung für Digitalsignale in einer getakteten Schaltung, **dadurch gekennzeichnet**, daß eine Erkennungsschaltung (1) vorhanden ist, die Änderung des Dateninhalts des zu überwachenden Digitalsignals feststellt, daß ein Frequenzteiler (2) vorhanden ist, dessen Eingang mit einer Taktleitung der Schaltung verbunden ist und dessen Ausgang mit einem Rücksetzeingang (CI) der Erkennungsschaltung (1) verbunden ist.

2. Überwachungsschaltung nach Anspruch 1, dadurch gekennzeichnet, daß der Erkennungsschaltung (1) eine Speichereinrichtung (3) nachgeschaltet ist, deren Dateneingang (D) mit dem Ausgang (Q) der Erkennungsschaltung (1) und deren Takteingang mit dem Ausgang des Frequenzteilers (2) verbunden ist.

3. Überwachungsschaltung nach Anspruch 1 oder 2, dadurch gekennzeichnet, daß die Erkennungsschaltung (1) ein Datenflipflop (D-FF) mit einem Rücksetzeingang (CI), einem Takteingang und einem Dateneingang (D) ist, an dessen Dateneingang (D) der logische Wert "1" anliegt, und an dessen Takteingang das zu überwachende Signal anliegt.

4. Überwachungsschaltung nach einem der Ansprüche 1 bis 3, dadurch gekennzeichnet, daß eine Multiplexeinrichtung (5) vorhanden ist, über die wahlweise eines von mehreren zu überwachenden Signalen an den Eingang der Erkennungsschaltung (1) anschaltbar ist.

5. Überwachungsschaltung nach Anspruch 4, dadurch gekennzeichnet, daß über einen weiteren Eingang der Multiplexeinrichtung (5) ein fester logischer Wert an den Eingang der Erkennungsschaltung (10) anschaltbar ist.

6. Überwachungsschaltung nach Anspruch 4 oder 5, dadurch gekennzeichnet, daß die Eingänge der Multiplexeinrichtung (5) mit den Ausgängen einer Koppelfeldeinrichtung (4) verbunden sind.

**Claims**

1. Circuit for monitoring digital signals in a clocked circuit, **characterized in** that a sensing circuit (1) is provided which senses any changes in the data content of the digital signal to be monitored, and that a frequency divider (2) is provided whose input is connected to a clock line of the circuit and whose output is connected to a reset input (CI) of the sensing circuit (1).

2. A monitoring circuit as claimed in claim 1, characterized in that the sensing circuit (1) is followed by a storage device (3) whose data input (D) is connected to the output (Q) of the sensing circuit (1) and whose clock input is connected to the output of the frequency divider (2).

3. A monitoring circuit as claimed in claim 1 or 2, characterized in that the sensing circuit (1) is a D flip-flop (D-FF) having a reset input (CI), a clock input and a data input (D), said data input (D) having a logic 1 applied thereto and said clock input being supplied with the signal to be monitored.

4. A monitoring circuit as claimed in any one of claims 1 to 3, characterized in that a multiplexer (5) is provided through which any one of a plurality of signals to be monitored can be applied to the input of the sensing circuit (1).

5. A monitoring circuit as claimed in claim 4, characterized in that via a further input of the multiplexer (5), a fixed logic level can be applied to the input of the sensing circuit (1).

6. A monitoring circuit as claimed in claim 4 or 5, characterized in that the inputs of the multiplexer (5) are connected to the outputs of a switching matrix (4).

**Revendications**

1. Circuit de surveillance de signaux alphanumériques dans un circuit à cyclage, **caractérisé en ce qu'**il est prévu un circuit d'identification (1) susceptible de relever une modification de la teneur en données du signal alphanumérique ainsi surveillé, qu'un diviseur de fréquence (2) soit prévu dont l'entrée est reliée avec le circuit de cyclage du circuit et la sortie est reliée avec une entrée de réarmement (CI) du circuit d'identification (1).

2. Circuit de surveillance selon la revendication 1, **caractérisé en ce que,** après le circuit d'identification (1) un dispositif à mémoire (3) est raccordé dont l'entrée des données (D) est raccordée avec la sortie (Q) du circuit d'identification (1) et dont l'entrée de cyclage est raccordée avec la sortie de diviseur de fréquence (2).

3. Circuit de surveillance selon les revendications 1 ou 2, **caractérisé en ce que,** le circuit d'identification (1) est une bascule de données (D-FF) avec une entrée de réarmement (CI),

une entrée de cyclage et une entrée de données (D), la valeur logique '1' étant à l'entrée des données, et le signal à surveiller étant à l'entrée de cyclage.

4. Circuit de surveillance selon l'une des revendications 1 à 3, **caractérisé en ce qu'**un dispositif multiplexeur (5) soit prévu, par l'intermédiaire duquel la commutation à l'entrée du circuit d'identification (1) d'un seul parmi plusieurs signaux à surveiller est effectuée au choix.

5. Circuit de surveillance selon la revendication 4, **caractérisé en ce que,** par l'intermédiaire d'une autre entrée du dispositif multiplexeur (5) la commutation d'une valeur logique fixe est assurée à l'entrée du circuit d'identification (10).

6. Circuit de surveillance selon les revendications 4 ou 5, **caractérisé en ce que,** les entrées de dispositif multiplexeur (5) sont reliées aux sorties d'un dispositif de couplage de champ (4).

Fig.1

Fig.2